# EUROPEAN PATENT APPLICATION

(11) **EP 4 761 378 A1**
(43) Date of publication of application: **17.06.2026**
(21) Application number: 24852426.6
(22) Date of filing: 12.08.2024
(51) Int. Cl.: H04W 52/02, H04W 76/28, H04W 72/121, H04W 72/231, H04W 72/232, H04L 1/00

(54) **METHOD AND DEVICE FOR TRANSMITTING AND RECEIVING SIGNAL IN WIRELESS COMMUNICATION SYSTEM**

(30) Priority: 10.08.2023 KR 20230105114; 18.08.2023 KR 20230108560
(71) Applicant: LG Electronics Inc., Yeongdeungpo-gu Seoul 07336 (KR)
(72) Inventor: MYUNG, Sechang, Seoul 06772 (KR); KIM, Seonwook, Seoul 06772 (KR); LEE, Youngdae, Seoul 06772 (KR); YANG, Suckchel, Seoul 06772 (KR); HWANG, Seunggye, Seoul 06772 (KR)
(74) Representative: Mooser, Sebastian Thomas
(86) International application number: PCT/KR2024/011984
(87) International publication number: WO 2025/034073

(57) **Abstract**

A method and a device for transmitting and receiving a signal in a wireless communication system, disclosed in the present specification, operate on the basis of a cell DTX/DRX configuration and a terminal DRX configuration. Specifically, outside an activation time based on a terminal DRX operation, a first field for activation and deactivation of a cell DTX operation and a cell DRX operation is transmitted and received together with a second field for a wake-up indication.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

According to an aspect of the present disclosure, a method of transmitting and receiving a signal by a user equipment (UE) in a wireless communication system includes receiving (i) a configuration for a UE discontinuous reception (DRX) operation and (ii) a configuration for a cell discontinuous transmission (DTX) operation and a cell DRX operation, and receiving downlink control information (DCI) including a first field for activation and deactivation of the cell DTX operation and the cell DRX operation based on the UE DRX operation, wherein, outside an active time based on the UE DRX operation, the first field is received together with a second field for a wake-up indication.

According to another aspect of the present disclosure, a method of transmitting and receiving a signal by a base station (BS) in a wireless communication system includes transmitting (i) a configuration for a UE discontinuous reception (DRX) operation and (ii) a configuration for a cell discontinuous transmission (DTX) operation and a cell DRX operation, and transmitting downlink control information (DCI) including a first field for activation and deactivation of the cell DTX operation and the cell DRX operation based on the UE DRX operation, and wherein, outside an active time based on the UE DRX operation, the first field is transmitted together with a second field for a wake-up indication.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to one embodiment of the present disclosure, when signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

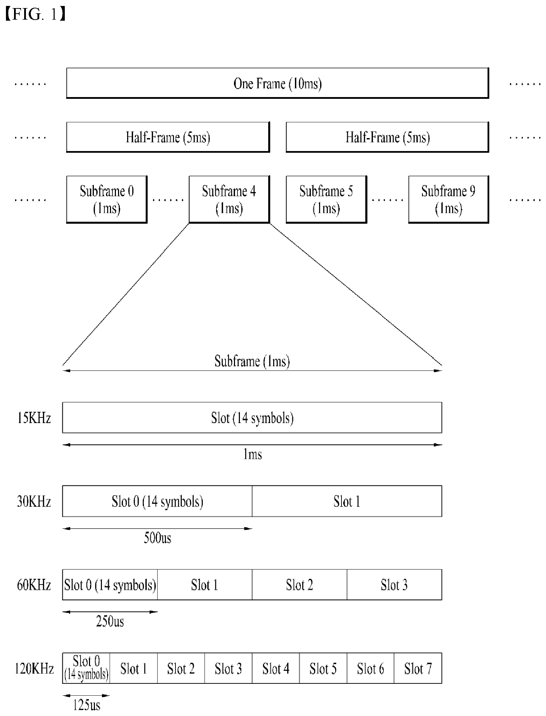

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

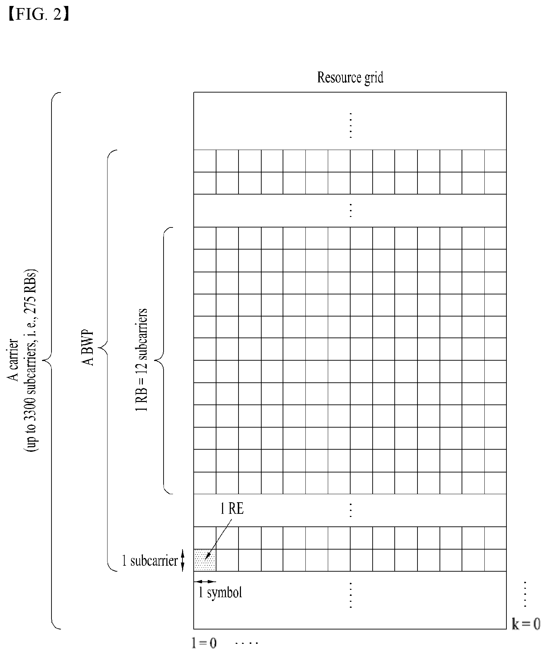

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel includes a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

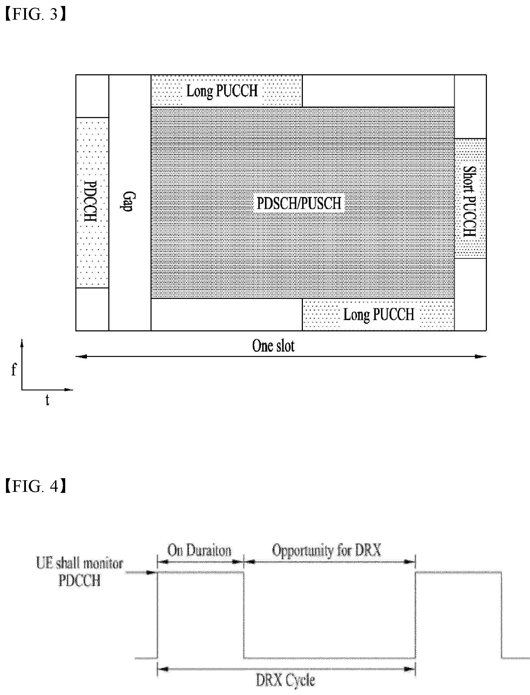

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

### Discontinuous Reception (DRX) Operation

The UE may perform a DRX operation, while performing the afore-described/proposed procedures and/or methods. A UE configured with DRX may reduce power consumption by discontinuously receiving a DL signal. DRX may be performed in an RRC_IDLE state, an RRC_INACTIVE state, and an RRC _CONNECTED stated. DRX is used for discontinuous reception of a paging signal in the RRC_IDLE state and the RRC_INACTIVE state. Now, DRX performed in the RRC_CONNECTED state (RRC_CONNECTED DRX) will be described below.

FIG. 4 is a diagram illustrating a DRX cycle (RRC_CONNECTED state).

Referring to FIG. 4, the DRX cycle includes On Duration and Opportunity for DRX. The DRX cycle defines a time interval in which On Duration is periodically repeated. On Duration is a time period during which the UE monitors to receive a PDCCH. When DRX is configured, the UE performs PDCCH monitoring during the On Duration. When there is any successfully detected PDCCH during the PDCCH monitoring, the UE operates an inactivity timer and is maintained in an awake state. On the other hand, when there is no successfully detected PDCCH during the PDCCH monitoring, the UE enters a sleep state, when the On Duration ends. Therefore, if DRX is configured, PDCCH monitoring/reception may be performed discontinuously in the time domain, when the afore-described/proposed procedures and/or methods are performed. For example, if DRX is configured, PDCCH reception occasions (e.g., slots having PDCCH search spaces) may be configured discontinuously according to a DRX configuration in the present disclosure. On the contrary, if DRX is not configured, PDCCH monitoring/reception may be performed continuously in the time domain, when the afore-described/proposed procedures and/or methods are performed. For example, if DRX is not configured, PDCCH reception occasions (e.g., slots having PDCCH search spaces) may be configured continuously in the present disclosure. PDCCH monitoring may be limited in a time period configured as a measurement gap, irrespective of whether DRX is configured.

Table 4 describes a UE operation related to DRX (in the RRC_CONNECTED state). Referring to Table 4, DRX configuration information is received by higher-layer (RRC) signaling, and DRX ON/OFF is controlled by a DRX command of the MAC layer. Once DRX is configured, the UE may perform PDCCH monitoring discontinuously in performing the described/proposed procedures and/or methods according to the present disclosure, as illustrated in FIG. 4.

**[Table 4]**

| | Type of signals | UE procedure |
|---|---|---|
| 1^{st} step | RRC signalling (MAC-CellGroupConfig) | - Receive DRX configuration information |
| 2^{nd} Step | MAC CE ((Long) DRX command MAC CE) | - Receive DRX command |
| 3^{rd} Step | - | - Monitor a PDCCH during an on-durat ion of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.
- Value of drx-OnDurationTimer: defines the length of the starting duration of a DRX cycle.
- Value of drx-InactivityTimer: defines the length of a time duration in which the UE is in the awake state after a PDCCH occasion in which a PDCCH indicating initial UL or DL data has been detected.
- Value of drx-HARQ-RTT-TimerDL: defines the length of a maximum time duration from reception of a DL initial transmission to reception of a DL retransmission.
- Value of drx-HARQ-RTT-TimerDL: defines the length of a maximum time duration from reception of a grant for a DL initial transmission to reception of a grant for a UL retransmission.
- drx-LongCycleStartOffset: defines the time duration and starting time of a DRX cycle.
- drx-ShortCycle (optional): defines the time duration of a short DRX cycle.

When at least one of drx-OnDurationTimer, drx-InactivityTimer, drx-HARQ-RTT-TimerDL, or drx-HARQ-RTT-TimerDL is running, the UE performs PDCCH monitoring in each PDCCH occasion, while staying in the awake state.

### 1. Cell-specific DTX-DRX operation for energy saving

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Energy conservation of BSs may contribute to building eco-friendly networks by reducing carbon emissions and reducing the operational expenditure (OPEX) of communication service providers, and thus has been considered as an important issue in wireless communication systems, including 3GPP. In particular, as the introduction of 5G communications requires higher transmission rates, BSs need to include more antennas and provide services through wider bandwidths and frequency bands. This has resulted in energy costs of BSs reaching as high as 20 % of total OPEX, according to recent studies. Due to this increased interest in energy savings of BSs, a new study item called "study on network energy savings" is approved in 3GPP NR release 18.

In detail, in the corresponding item, to improve the energy saving capability of the BS in terms of transmission and reception, the following enhancement techniques have been considered.
- How to achieve more efficient operation dynamically and/or semi-statically and finer granularity adaptation of transmissions and/or receptions in one or more of network energy saving techniques in time, frequency, spatial, and power domains, with potential support/feedback from UE, and potential UE assistance information.

In particular, the present specification proposes a method and DCI format for activating/deactivating cell DTX/DRX configurations on a cell or cell group basis when a BS performs cell discontinuous transmission (DTX)/discontinuous reception (DRX) operation of an ON/OFF interval pattern for energy saving.

When a UE enters a connected mode after initially connecting to the BS, the UE needs to continuously monitor PDCCH to check whether there is a transmission scheduled for the UE in each configured search space (SS). However, when this scheduling is not always present, a battery of the UE may quickly be drained due to unnecessary PDCCH monitoring operations being performed every time. Accordingly, the BS may configure connected mode discontinuous reception (C-DRX), which is an operation that achieves an effect of saving power for the UE by configuring a time period (ON duration) in which the UE needs to perform PDCCH monitoring and a time period (OFF duration) in which the UE does not need to perform PDCCH monitoring. In terms of the BS, a C-DRX of the UE may also be helpful for ES, the BS does not need to transmit PDCCH to a specific UE during the C-DRX OFF period of the corresponding UE, and thus the resource may be used for other purposes and ES gains may be obtained through DTX/DRX. However, the UE may transmit without restriction as needed in the OFF period by using pre-configured resources (e.g., SR, PUCCH, or CG-PUSCH), and thus the BS needs to wait for UL reception from the UE, which may or may not transmit at any time. C-DRX is configured to UE specific. DRX cycles or ON/OFF cycles are not aligned between UEs within a cell, and thus when the ON durations of the UEs are configured in a TDM format, the BS needs to perform PDCCH transmission for each ON duration, and thus may not sleep, making it difficult to expect ES gain.

A cell-specific DTX/DRX operation allows the BS to turn off transmission/reception for a specific time period. Restricted DTX/DRX may be used, which only allows transmission/reception of specific signals/channels. In the present specification, a method for saving energy of a BS is proposed. A method of operating UEs for each time interval when cell DTX/DRX is combined with DRX operations of UEs within a cell is proposed. For convenience, the method and operation method of Cell DTX/DRX being combined with the connected mode DRX (C-DRX) operation of the UE have been mainly described, but the operation of the present specification may be equally applied and extended to other DRX operations of the UE (e.g., Idle mode DRX) as well as C-DRX.

In the present disclosure, when the BS operates in an NES mode for ES, this may mean, for example, that the BS preconfigures a plurality of OFF durations (DTX durations of the BS) to turn off transmission of a specific DL signal for a specific time period, and dynamically indicates one of the OFF durations to indicate that the corresponding DL signal will not be transmitted for a predefined time period, thereby operating to achieve power consumption reduction of the BS and the UE. When the BS operates in an NES mode for ES, this may mean an operating mode in which, in terms of BWP switching and dynamic RB adaptation in the frequency domain as well as the time domain, when a specific receiving antenna port of the BS is turned off semi-statically or dynamically, the BS does not perform transmission and/or reception through the corresponding antenna port, thereby reducing power consumption of the BS and the UE. When the BS operates in an NES mode for ES, this may mean an operating mode in which the BS does not transmit and/or receive through a specific receiving antenna port of the BS when the antenna port is turned off semi-statically or dynamically in the spatial domain, thereby reducing power consumption of the BS and the UE.

The UE periodically performs PDCCH monitoring in the ON duration to check whether there is a DL/UL signal to transmit/receive. When a PDCCH is received in the ON duration, the UE performs DL reception or UL transmission according to the instructions. In the case of UL transmission of a UE, when there is data in the UL buffer regardless of C-DRX, a UE in a sleep mode may wake up and transmit SR. For a UE in an idle mode, the UE may operate in idle mode DRX (I-DRX), periodically monitoring paging and entering sleep mode again when the UE is not a target UE. Here, the meaning of the UE operating in a sleep mode may mean "regardless of the active time determined by C-DRX" or "even in a period other than the active time determined by C-DRX." 'In C-DRX operation, a time interval including ON and OFF durations is repeated' is defined as a DRX cycle. The length of a DRX cycle is defined as a time from the start of an ON interval to the start of a next ON interval. There are two types of DRX cycles: long DRX cycle and short DRX cycle. When the length of the DRX cycle increases, if a PDSCH is to be transmitted by the BS immediately after the end of a specific ON duration of the UE, the BS needs to wait until the next ON duration of the UE, which may increase latency. The UE does not transmit P-CSI or SRS during the OFF duration, and thus the BS may increase resource utilization by allocating the resources to other UEs. The BS may also operate in energy saving mode to save power during the OFF duration of the UE.

A long DRX cycle and a short DRX cycle may be configured simultaneously, in which case the long DRX cycle needs to be configured to an integer multiple of the short DRX cycle (the onDurationTimer values are the same). When there is no data activity during the ON duration of a long DRX cycle (e.g., no PDCCH reception), the UE operates with a long DRX cycle. When there is data activity during the ON duration of a long DRX cycle, the UE operates in a short DRX cycle for a time period corresponding to drx-ShortCycleTimer, and when there is no data activity during the ON period of the short DRX cycle, the UE switches back to the long DRX cycle and operates. In this case, the start of the ON duration in a short DRX cycle is determined by the drx-StartOffset and drx-SlotOffet values, as in a long DRX cycle.

The BS instruct the UE to enter a DRX sleep directly without operating in active mode until the end of the ON duration through the DRX command MAC control element (CE). That is, the current BS may terminate an active time of the UE and enter the DRX cycle immediately. When only a long DRX cycle is configured for the UE, the UE operates only in the long DRX cycle, and when a short DRX cycle is also configured, the UE enters the short DRX cycle mode immediately after receiving the DRX command MAC CE. When the BS instructs a long DRX command MAC CE, the UE operates in long DRX cycle mode even if a short DRX cycle is configured.

The BS may control a starting point of a long DRX cycle through an RRC parameter drx-LongCycleStartOffset, and the offset value is defined in ms units such that a long DRX cycle may start at a slot boundary. The starting point of the ON duration may be configured at slot level granularity through another RRC parameter drx-SlotOffset. The start of the ON duration is defined as a relative position of the ON duration by applying the slot offset indicated from the reference point indicated by LongCycleStartOffset. The BS may align the ON and OFF durations of multiple UEs within a cell and utilize the ON and OFF durations for an ES operation by adjusting the positions of the starting point of the DRX cycle and the starting point of the ON duration through the parameters. However, for ES through the dynamic transmit/receive OFF time pattern of the BS, a more dynamic offset value indication may be required.

The UE may perform ES by waking up only in the ON duration through the C-DRX configuration and monitoring the presence or absence of PDCCH transmitted to the UE, compared to continuously (e.g., every slot) monitoring the PDCCH. When the BS has no data to transmit in the upcoming ON interval of the UE, the BS may save some more battery of the UE by transmitting a WUS before the ON duration of the UE starts, indicating that there is no need to wake up from the ON duration (i.e., there is no need to start the onduration timer). When there is no data to be transmitted/received in the next ON duration for a UE with C-DRX configured, the BS may transmit a WUS through DCI format 2_6 in a WUS opportunity configured before the ON duration, thereby indicating to the UE that there is no need to wake up in this ON duration. The UE that receives the WUS instruction may remain in a sleep mode without switching to an active mode, allowing more ESs.

The cell DTX/DRX operation has a structure similar to that of C-DRX of the UE, and may include an active period in which all signals and channels may be transmitted/received without restriction, and a non-active period in which all signals and channels may be transmitted/received OFF or only specific signals and channels may be transmitted/received with restrictions. For example, in the non-active period, only PDCCH transmission or RACH/SR PUCCH reception of the BS may be permitted. Cell DTX/DRX configuration may only be configured and activated via RRC. Alternatively, some parameters may be configured by RRC and the remaining parameters may be configured/indicated and activated via L1/L2 signaling. L1/L2 signaling may be, for example, (group-common) DCI/MAC-CE. Information about the location and length of the active and inactive periods of the cell DTX/DRX may be pre-received and preconfigured through specific RRC parameters. For example, the start point of an active period may be configured by an offset relative to a specific subframe boundary or a specific SFN value. The duration of the active period may be configured through length-related parameters, timers, or the like. In this case, multiple candidates for parameters or timers may be preconfigured through RRC signaling, and then one of the configured candidates may be indicated upon activation through L1/L2 signaling. During the cell DTX/DRX active period, all signals and channels may be transmitted/received without any special transmission/reception restrictions, just like the normal operation of the BS. Time durations outside the active period are basically considered inactive periods, and transmission/reception may be restricted beyond pre-configured signals and channels. The BS may obtain energy saving (ES) gains through the operation of performing only the minimum transmission/reception, and thus the operation of the inactive period of the cell DTX/DRX operation may be regarded as the operation when the NES state/mode is ON.

### [Method #1] Cell/cell group DTX/DRX activation/deactivation method via group common (GC-) DCI and MAC CE

Method #1 may include the following methods.
(1) Method of following the most recently received instruction among GC-DCI and MAC CE
(2) Method of preconfiguring/pre-receiving instructions to give priority to a specific instruction among GC-DCI and MAC CE
(3) Method of always giving priority to MAC CE instructions when there is no separate configuration/instruction to give priority to a specific instruction
   i. When GC-DCI and MAC CE instructions are received simultaneously at the same time, method of following the MAC CE instruction
   ii. Method of dismissing GC-DCI instructions when cell DTX/DRX configurations are activated or deactivated by MAC CE instructions
(4) Method of always giving priority to GC-DCI instructions when there is no separate configuration/instruction to give priority to a specific instruction
   i. When GC-DCI and MAC CE instructions are received simultaneously at the same time, method of following the GC-DCI instruction
   ii. Method of dismissing MAC CE indications received after cell DTX/DRX configuration is activated or deactivated with GC-DCI
(5) Method of activating or deactivating cell DTX/DRX configurations only after receiving MAC CE after receiving GC-DCI

The following is a detailed description of methods (1) to (5) of Method #1.

Unlike C-DRX, which is configured UE-specifically, cell DTX/DRX configurations are applied commonly to all UEs within the cell. Therefore, activation/deactivation does not need to be performed for each UE. When activation/deactivation is performed via GC-DCI, there may be a gain in terms of signaling overhead. However, when HARQ-ACK feedback transmission is not configured, the BS may not know whether the UE has properly received the GC-DCI indicating activation or deactivation. This may result in errors (misalignment) in whether or not cell DTX/DRX currently operates or is applied between the UE and the BS. On the other hand, when activation/deactivation is performed through MAC CE, signaling overhead increases because instructions need to be transmitted to each UE. However, the UE needs to transmit HARQ-ACK feedback for the MAC CE instruction, and thus the MAC CE may have a relative advantage over GC-DCI in terms of reliability.

Activation/deactivation of cell DTX/DRX configurations may be configured via GC-DCI and MAC CE. When both of these instructions may be used for activating/deactivating, consideration may need to be given to whether the UE may follow the instruction transmitted via GC-DCI or the instruction transmitted via MAC CE, or whether to give priority to a specific instruction. First, the UE may always follow the last instruction received unless otherwise instructed. For example, the UE receives an activation instruction for cell DTX/DRX configurations through GC-DCI in slot#n and performs transmission/reception according to the cell DTX/DRX operation. After receiving a deactivation instruction through MAC CE in slot#n+4, deactivation of cell DTX/DRX configurations may be performed according to the most recently received instruction.

Alternatively, the BS may be preconfigured/pre-instructed to give priority to a specific instruction between GC-DCI and MAC CE. For example, when the GC-DCI instruction is configured/instructed to take precedence over the MAC CE, the cell DTX/DRX configuration activated by the GC-DCI instruction will not be deactivated by the MAC CE until the timer or validity period of the configuration expires, and may only be deactivated by the GC-DCI.

When there is no separate configuration/instruction to give priority to a specific instruction to the UE, a specific instruction method may be applied preferentially according to a prior agreement. One method is to always allow MAC CE instructions to take precedence over GC-DCI. When GC-DCI and MAC CE indications are received simultaneously at the same time (or within a specific time interval), the UE may give priority to the MAC CE indication. For example, when GC-DCI includes an activation instruction and MAC CE includes a deactivation instruction, the UE may follow the MAC CE instruction. For cell DTX/DRX configurations activated or deactivated by MAC CE instructions, instructions via GC-DCI are dismissed until the timer or valid period expires, and the UE may only follow instructions via MAC CE.

Alternatively, when there is no separate configuration/instruction to give priority to a specific instruction, the GC-DCI instruction may always take precedence. In this case, when GC-DCI and MAC CE instructions are received simultaneously at the same time (or within a specific time interval), the UE may give priority to applying the GC-DCI instruction. MAC CE instructions received after the cell DTX/DRX configuration is activated or deactivated with GC-DCI may be dismissed until the timer or validity period of the cell DTX/DRX configuration expires.

In particular, after receiving a GC-DCI instruction for activating or deactivating a cell DTX/DRX configuration, it is also possible to receive an additional MAC CE for activating or deactivating a cell DTX/DRX configuration such that the activation or deactivation of the cell DTX/DRX configuration is applied.

### [Method #2] Method of activating/deactivating cell DTX/DRX configurations of UE based on GC-DCI or timer, and method for determining the application time of activation/deactivation

Method #2 may include the following methods.
(1) Method of preconfiguring a default operation or fallback operation in case a UE fails to receive GC-DCI, depending on whether the BS always transmits GC-DCI at every monitoring occasion (MO)
   A. Method of performing (in)activity based on a timer included in the cell DTX/DRX configuration or a timer indicated through (in)active GC-DCI when the UE does not always monitor the GC-DCI instruction for each configured MO (especially in the cell DTX inactive period)
   B. Method of not configuring the timer when the UE always monitors the GC-DCI instruction for each MO configured
   C. Method in which a timer is configured even when the UE always monitors the GC-DCI instruction for each MO configured and a BS enables (de)activation via GC-DCI before the timer expires (timer value adaptation via DCI is also possible)
(2) Method of activating/deactivating the cell DTX/DRX configuration after a pre-set time (e.g., 2 slots) based on the last MO within the MO group when the UE does not receive the GC-DCI instruction, when the BS transmits the GC-DCI instruction multiple times from multiple MOs, even if the reference time or application delay is not separately configured when the GC-DCI instruction is received from at least one MO within a preconfigured MO group
(3) Method of receiving multiple candidate (in)activation points (which may be preconfigured periodically) from a BS, and when a UE receives a GC-DCI instruction from a specific MO, candidate (in)activating cell DTX/DRX at the closest candidate (in)activation point among the configured candidate (in)activation points
(4) Characteristically, Method of applying deactivation immediately after the UE receives the GC-DCI instruction in the case of deactivation in Method-(2) and Method-(3) above

The following is a detailed description of methods (1) to (4) of Method #2.

The UE may pre-receive an MO for receiving GC-DCI instructions from the BS to (de)activate cell DTX/DRX configurations. The BS may or may not always transmit GC-DCI in the configured MO. The UE may perform GC-DCI monitoring for each MO configured, or may not perform GC-DCI monitoring during certain time durations (e.g., during cell DTX inactivity durations).

According to 3GPP TS 38.212 and 38.213, when DCI format 2_7, which is GC-DCI, is not received (detected) in the configured MO, the default operation of the UE is to skip the PO (paging occasion) associated with the MO. If DCI format 2_6 is not received in the configured MO, a default operation may be configured when GC-DCI is not received in the MO. Therefore, the BS may preconfigure whether the UE may skip the ON duration of the DRX cycle linked to the MO.

Similarly, for GC-DCI that (de)activates cell DTX/DRX configurations, a default or fallback operation may need to be defined/configured, depending on whether the BS always transmits GC-DCI for each MO configured. Alternatively, when the BS does not always transmit GC-DCI for each configured MO, a fallback operation may not be necessary. For example, when the current cell DTX/DRX is activated and operates and the BS always transmits GC-DCI in the configured MO, if the UE does not receive the GC-DCI, the default operation may be configured to keep the UE in the active state. Alternatively, in the same situation, when GC-DCI is not received, the default operation may be configured to fall back to the inactive state. As another example, when cell DTX/DRX configurations are deactivated, if the UE fails to receive GC-DCI in a specific MO, the default operation may be configured to enable the specific cell DTX/DRX configurations. In this case, specific MO and specific cell DTX/DRX are promised/preconfigured. For example, when the BS semi-statically configures a cell DTX/DRX activation pattern to the UE, the UE is configured to confirm activation through an activation GD-DCI in the configured MO. However, if GC-DCI is not received, the UE may consider that the UE has missed the GC-DCI transmitted by the BS and may activate and operate the pre-arranged cell DTX or cell DRX configurations.

When the UE does not always monitor the GC-DCI instruction for each configured MO (especially in the Cell DTX inactive period), it may not receive the deactivation instruction transmitted by the BS via GC-DCI. Alternatively, the BS may not be able to transmit the deactivation instruction itself due to the cell DTX inactivity interval configuration. Taking this into account, a timer included in the cell DTX/DRX configurations or a timer via (de)activated GC-DCI may be configured. In this case, the activated cell DTX/DRX configuration may be deactivated when the configured/instructed timer expires even if the BS does not transmit GC-DCI (even if the UE does not receive GC-DCI). If the BS explicitly configures a timer in the cell DTX/DRX configurations or indicates a timer via GC-DCI, this may implicitly indicate that the BS will not always transmit GC-DCI for each configured MO. Alternatively, the BS may have turned off GC-DCI monitoring because the BS has no plans to (de)activate DCI in the near future.

When the BS configures a timer within the cell DTX/DRX configuration or directly instructs the timer via GC-DCI, this may implicitly configure/instruct that the BS will always transmit GC-DCI for each MO the BS has configured. Conversely, when the UE is configured to always monitor GC-DCI instructions for each MO configured, the timer may be considered as not being separately configured/instructed. In this case, the UE always follows the GC-DCI instruction received from the MO, but if the UE does not receive the MO, the UE may perform the default operation preconfigured as explained above.

Alternatively, even if the UE always monitors the GC-DCI indication for each configured MO, the timer may be configured via the cell DTX/DRX configuration or indicated via the GC-DCI. In this case, the BS may instruct the (de)activation via GC-DCI before the timer expires, and adaptation of the timer value via GC-DCI is also possible. In this case, adapting the timer value may mean pointing to one of the preconfigured candidate timer values (pointing to the index).

In case the UE does not receive the GC-DCI instruction, the BS may transmit the GC-DCI instruction multiple times from multiple MOs. In this case, the reference time or application delay, which is the point in time when the actual cell DTX/DRX configuration is applied, needs to be determined. Even if the BS does not separately configure a reference time or application delay, when a GC-DCI instruction is received from at least one MO within a preconfigured MO group, the UE may activate or deactivate the cell DTX/DRX configuration after a preconfigured time (e.g., 2 slots) based on the last MO within the MO group. Through this method, the BS may align the starting point of activation or deactivation of cell DTX/DRX configurations even if the timing at which UEs within the cell receive GC-DCI is different. Specifically, in the case of deactivation, the UE may apply deactivation immediately after receiving the GC-DCI, regardless of the time of GC-DCI reception.

More generally, the UE may be preconfigured with multiple candidate (de)activation points (which may be configured periodically), and when the UE receives an activation or deactivation GC-DCI instruction in a specific MO, the UE may (de)activate the cell DTX/DRX at the closest (de)activation point among the configured candidate (de)activation points. Likewise, in the case of deactivation, the UE may apply deactivation immediately upon receiving the GC-DCI instruction.

### [Method #3] Method of configuring a field of group-common DCI for activating/deactivating cell DTX/DRX configurations for each UE or for all UEs as follows

Method #3 may include the following methods.
(1) Method of configuring GC-DCI with a plurality of blocks having a DTX (de)activation indication field, a DRX (de)activation indication field, a timer or (valid) interval field, and/or a cell DTX/DRX configuration index field
   A. Depending on the number of serving cells configured for the UE, the location and size of the block to be viewed within GC-DCI may differ for each UE.
   B. Cell DTX and cell DRX may be configured separately, and thus a specific cell may have only DTX configurations or only DRX configurations, and the size of each block that constitutes GC-DCI may vary by a UE. Block sizes may vary for each UE even when multiple timer and cell DTX/DRX configurations are configured.
   C. When cell DTX/DRX deactivation is instructed for a specific cell/cell group, certain fields may be omitted. Alternatively, even if a specific field exists, it may be dismissed. Alternatively, whether or not it is dismissed may vary depending on whether a timer is configured.
      When a new DCI format that (de)activates cell DTX/DRX configurations is called DCI format 2_X (e.g., DCI format 2_9),
(2) Method of configuring DCI by merging information of DCI format 2_X into existing DCI format 2_6
   A. Method in which DCI is structured in a way that information of DCI format 2_x is appended to 2_6 or a block position of DCI format 2_X is interpreted by adding the offset value of DCI format 2_6 (ps-PositionDCI-2-6)
   B. Method in which DCI format 2_X is configured differently for each cell/cell group and the location of the information block of DCI format 2_6 is indicated through separate offset parameter configuration
(3) When DCI is to be configured by merging information of DCI format 2_X with existing DCI format 2_6,
   A. Method of additionally configuring the MO of DCI format 2_X to the MO of DCI format 2_6 (in this case, the DCI format that combines DCI format 2_6 and DCI format 2_X is transmitted in the MO of DCI format 2_6)
   B. Method of preconfiguring/predefining a default operation when only one DCI format, either DCI format 2_6 or DCI format 2_X, is transmitted in the DCI format 2_6 MO, and the default operation in case DCI format 2_X and DCI format 2_6 are not detected because DCI format 2_6 is not always transmitted in the DCI format 2_6 MO configured from the BS
   C. Method of configuring each block or wake-up indication field block in the new DCI format 2_X separately (in this case, the SCell dormancy indication field is excluded or a previously promised/configured operation is performed) when DCI format 2_X transmitted in MO of DCI format 2_6 is transmitted including information of DCI format 2_6
(4) Method in which new DCI format 2_X allows PDCCH transmission and monitoring during cell DTX inactivity durations (via specific RNTI/SS configurations) as an exception

The following is a detailed description of methods (1) to (4) of Method #3.

A field of group-common DCI for activating/deactivating cell DTX/DRX configurations may be configured per UE or common to UEs. Basically, the cell DTX configurations and cell DRX configurations may be configured separately, and thus a field indicating activation/deactivation of the cell DTX configurations and a field for activating/deactivating the cell DRX configurations are required separately. Multiple cell DTX/DRX configurations may be configured together (e.g., index#1=Cell DTX configuration #1, index#2=Cell DTX configuration #2, index#3=Cell DRX configuration #3, index#4=Cell DTX and DRX joint configuration #4), and within the configuration, a timer (or duration) that maintains (de)activation of each cell DTX/DRX configuration may be configured for each cell. Therefore, the cell DTX (de)activation indication field / cell DRX (de)activation indication field / timer or (valid) interval field / cell DTX/DRX configuration index field may be configured as one block. The corresponding block is mapped for each cell/cell group configured to the UE, and GC-DCI may include multiple blocks. In this case, the number of serving cells configured for each UE may be different, and the cell DTX configuration and cell DRX configuration may also be configured for each cell, and thus there may be only DTX configuration or only DRX configuration for each cell. Therefore, the size of each block that constitutes GC-DCI may differ for each UE, and even when multiple timer and cell DTX/DRX configurations are configured, the size of the block may differ for each UE. Alternatively, conversely, the number of bits that constitute a block per cell is always configured to be constant (e.g., to match the maximum size), and depending on the configurations per cell or UE, all bits within the block may be utilized or some bits may not be utilized. Whether certain bits within a block are dismissed may vary depending on whether a timer is configured or whether cell DTX/DRX is deactivated for a particular cell/cell group. For example, when cell DTX/DRX deactivation of a specific cell/cell group is indicated, certain fields (fields indicating timer or cell DTX/DRX configuration index) may be omitted or dismissed even if present in the block and the DCI may be interpreted.

DCI format 2_6 is scrambled with PS-RNTI (power saving-radio network temporary identifier), and the starting position of each UE block is determined by the ps-PositionDCI-2-6 parameter. Each UE block includes a wake-up indication field and an Scell dormancy indication field. When the value of the wake-up indication field consisting of 1 bit is 0, the drx-onDurationTimer of the next long DRX cycle is not started, and if it is 1, the timer is started. The size of the bitmap in the S-Cell dormancy instruction field is determined by the DormancyGroupID configuration. DCI format 2_6 may only be transmitted outside the DRX active time of the UE (received in terms of the UE), and the size is determined by sizeDCI-2-6.

When a new DCI format that (de)activates cell DTX/DRX configurations is called DCI format 2_X, a method of configuring DCI by merging information of DCI format 2_X with existing DCI format 2_6 may be considered in order not to increase the DCI size budget of the UE or the required number of BDs. In this case, considering backward compatibility with existing UEs, DCI may be configured in a form in which information of DCI format 2_x is attached to the end of 2_6. Alternatively, the block position of DCI format 2_X may be interpreted by adding the ps-Offset value of DCI format 2_6. In the former case, the UE interprets the DCI by considering that a portion after the last block of DCI format 2_6 includes blocks for activating/deactivating cell DTX/DRX configurations. In the latter case, the UE may know the start position of the block for activating/deactivating cell DTX/DRX configurations by adding the block position offset value of DCI format 2_X to the ps-Offset value indicating the block start position within DCI format 2_6. Alternatively, without considering the existing UE, DCI format 2_X may be configured differently for each cell/cell group, and information of DCI format 2_6 may be configured as a separate offset parameter to indicate the location of a block including a wake-up indication field and an S-cell dormancy indication field.

In this case, when DCI is configured by merging information of DCI format 2_X with existing DCI format 2_6, MO of DCI format 2_6 may be configured only outside DRX active time of UE C-DRX, and MO of DCI format 2_X may be configured regardless of inside/outside DRX active time. Considering this, the MO of DCI format 2_X is additionally configured to the MO of DCI format 2_6, and in this case, a DCI format that is a combination of DCI format 2_6 and DCI format 2_X may be transmitted in the MO of DCI format 2_6. Alternatively, a UE configured with a set of search space (SS) or MO for two DCI formats may detect both DCIs in which the two MOs overlap. Alternatively, the UE may receive two DCI formats in a time-division multiplexing (TDM) manner by shifting one of the two MOs in which the two MOs overlap such that the two MOs do not overlap.

In case of DCI format 2_6, DCI format 2_6 is not always transmitted in the configured MO, and thus only one DCI format, either DCI format 2_6 or DCI format 2_X, is transmitted in the DCI format 2_6 MO, and a default operation may be preconfigured/predefined when neither DCI format 2_X nor DCI format 2_6 is received (or detected). For example, if DCI format 2_6 is not received, the default operation may be configured to not start the drx-onDurationTimer of the next long DRX cycle. When DCI format 2_X is not received, the activated cell DTX/DRX configurations of each cell may be configured/defined to remain as is.

When the DCI format 2_X transmitted in the MO of the DCI format 2_6 includes information of the DCI format 2_6, each block or wake-up indication field block in the DCI format 2_X may be included separately. In this case, the S-cell dormancy instruction field may be excluded or a promised/preconfigured operation may be performed. PDCCH transmission may be turned off depending on the configurations during the cell DTX inactivity duration, and thus GC-DCI monitoring may not be performed because the BS does not transmit PDCCH and the UE does not expect to receive PDCCH. However, to (de)activate cell DTX/DRX configurations in an inactive duration, DCI format 2_X may exceptionally allow PDCCH transmission and monitoring even in the cell DTX inactive duration (via specific RNTI/SS configurations).

In Method #3, information within a block included in DCI format 2_6 may include separate bits, such as a cell DTX activated/deactivated indication field, a cell DRX activated/deactivated indication field, and a timer value field. Alternatively, multiple pieces of information may be jointly coded into a single state. For example, each block may include M states below.
- State 0: Cell DTX/DRX deactivation,
- State 1: cell DTX pattern #1 / cell DRX pattern #1 activation & timer = A,
- State 2: cell DTX pattern #2 / cell DRX pattern #2 activation & timer = B, ...
- State M-1: cell DTX pattern #N / cell DRX pattern #N activation & timer = X.

This joint coding method may be applied to all information included within a block. For example, when there are four pieces of information included in a block, all four pieces of information may be jointly coded and configured to one state. Alternatively, only three pieces of information may be jointly coded, with one piece of information including a separate bit.

When cell DTX/DRX activation/deactivation is instructed to the UE, information on when the application actually begins may be directly instructed by including it in the DCI. The corresponding information may be indicated for each block, for each block group, or for all blocks in common, depending on the configurations. For example, when the K value is indicated as the application time through DCI, the UE may start actual DTX/DRX activation/deactivation from a point in time K slots (or symbols) after the PDCCH reception time (e.g., the slot in which the PDCCH is received or the PDCCH start/end symbol). The PDCCH MO in which DCI format 2_6 is transmitted may have a monitoring window of a specific length configured in front of a specific offset from the cell DTX active period and/or cell DTX inactive period, similar to the MinTimeGap of DCI format 2_6. In this case, the offset value and the length of the monitoring window may be preconfigured from the BS. If there is a monitoring window ahead of a specific offset from the cell DTX active period, MOs may be included in the cell DTX inactive period, and thus DCI format 2_X may be exceptionally allowed to be transmitted even if the BS has configured all PDCCH reception to OFF or transmission of a specific type (Type-3 CSS) of SS in the inactive period when configuring the cell DTX.

The contents of the present disclosure are not limited to transmission and reception of UL and/or DL signals. For example, the contents of the present disclosure may also be used in direct communication between UEs. A BS in the present disclosure may be a concept that includes not only a BS but also a relay node. For example, an operation of the BS in the present disclosure may be performed by the BS, but may also be performed by the relay node.

It is obvious that the examples of the proposed method described above may also be included as one of the implementation methods of the present disclosure, and thus may be considered as a kind of proposed method. The proposed methods described above may be implemented independently, but may also be implemented in the form of a combination (or merge) of some proposed methods. A rule may be defined such that information on whether the proposed methods are applicable (or information on the rules of the proposed methods) is reported by the BS to the UE or by a receiving UE to a receiving UE through a predefined signal (e.g., physical layer signal or higher layer signal).

### Implementation example

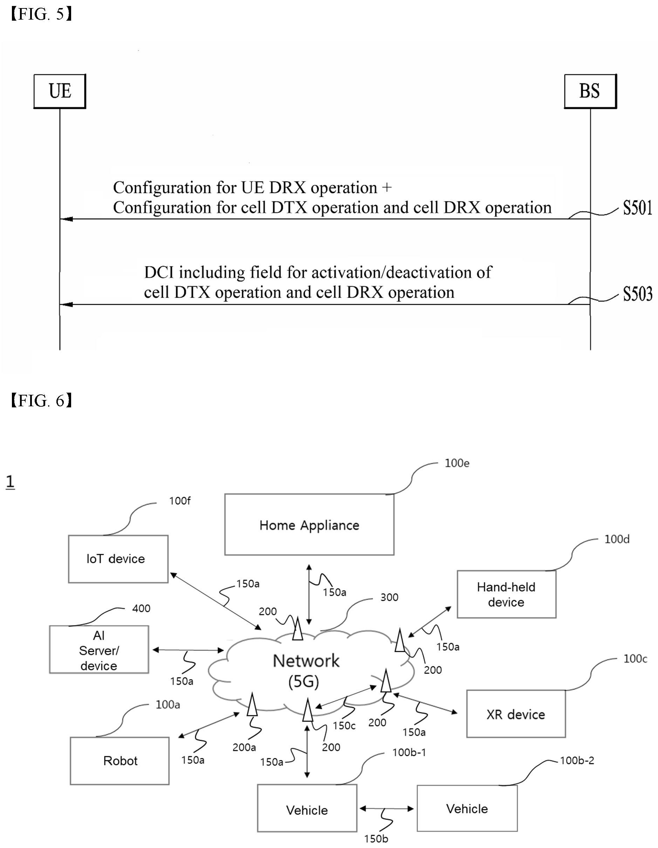

FIG. 5 is a flowchart of a signal transmission and reception method according to embodiments of the present disclosure.

Referring to FIG. 5, embodiments of the present disclosure may be performed by a UE, and may include receiving (i) a configuration for a UE DRX operation and (ii) a configuration for a cell DTX operation and a cell DRX operation (S501), and receiving downlink control information (DCI) including a first field for activation and deactivation of the cell DTX operation and the cell DRX operation based on the UE DRX operation (S503).

Other embodiments of the present disclosure may be performed by a BS, and may include transmitting (i) a configuration for a UE DRX operation and (ii) a configuration for a cell DTX operation and a cell DRX operation (S501), and transmitting downlink control information (DCI) including a first field for activation and deactivation of the cell DTX operation and the cell DRX operation based on the UE DRX operation (S503).

In addition to the operation of FIG. 5, one or more of the operations described in Section 1 may be additionally performed.

For example, referring to (2) of Method #3, information of DCI format 2_X (or DCI format 2_9) including the first field may be merged into DCI format 2_6. DCI formats 2_6 and DCI 2_9 are group-common DCIs, and each DCI format includes information for one or more UEs. Within the DCI format, information for a specific UE is referred to as a block. A mapping relationship between blocks and UEs of DCI format 2_6 may be received through the RRC parameter ps-PositionDCI-2-6. A mapping relationship between blocks and UEs of DCI format 2_X may be received through the RRC parameter positionInDCI-cellDTRX.

DCI format 2_6 is received outside the active time related to the DRX operation of the UE. In general, DCI is received within the active time of DRX operation, and thus DCI format 2_X may not be received outside the active time of the DRX operation. However, to perform activation/deactivation of cell DTX/DRX operation outside the active time of the UE DRX operation, information of DCI format 2_X may be merged with DCI format 2_6 and transmitted through MO of DCI format 2_6.

DCI format 2_6 includes at least one wake-up indication field, and thus the information of DCI format 2_X is received merged with DCI format 2_6, which means that the first field for activation and deactivation of cell DTX operation and cell DRX operation is received together with the second field for wake-up indication.

The second field includes 1 bit for one UE. The first field may include 2 bits when both the cell DTX operation and the cell DRX operation are configured in the UE, or 1 bit when only one of the two is configured.

DCI format 2_X may be received within the active time of the UE DRX operation, and thus information of DCI format 2_X may be received without being merged with information of DCI format 2_6. Therefore, a DCI including only the first field without the second field may be received.

Referring to (2)-A of Method #3, when DCI format 2_6 and DCI format 2_X are merged, information of DCI format 2_6 may be located first and then information of DCI format 2_X may be located. The merged DCI includes information about multiple UEs, and thus when a block of DCI format 2_X is called the first block and a block of DCI format 2_6 is called the second block, the merged DCI may include the first blocks after the second blocks. Each of the first blocks includes a first field, and each of the second blocks includes a second field.

First information about the position of the first block for a specific UE among the first blocks is received via positionInDCI-cellDTRX. Second information about the location of the second block for a specific UE among the second blocks is received via ps-PositionDCI-2-6.

All first blocks are located behind all second blocks, and thus the UE may derive the location of the first block by adding the values of the first information and the second information.

Configurations for cell DTX operation and cell DRX operation may be transmitted from the BS to the UE through the RRC parameter CellDTX-DRX-Config. Configurations for the UE DRX operation may be transmitted from the BS to the UE through the RRC parameter DRX-Config.

In addition to the operations described with respect to FIG. 5, one or more of the operations described with respect to FIGS. 1 to 4 and/or the operations described in section [1] may be additionally performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

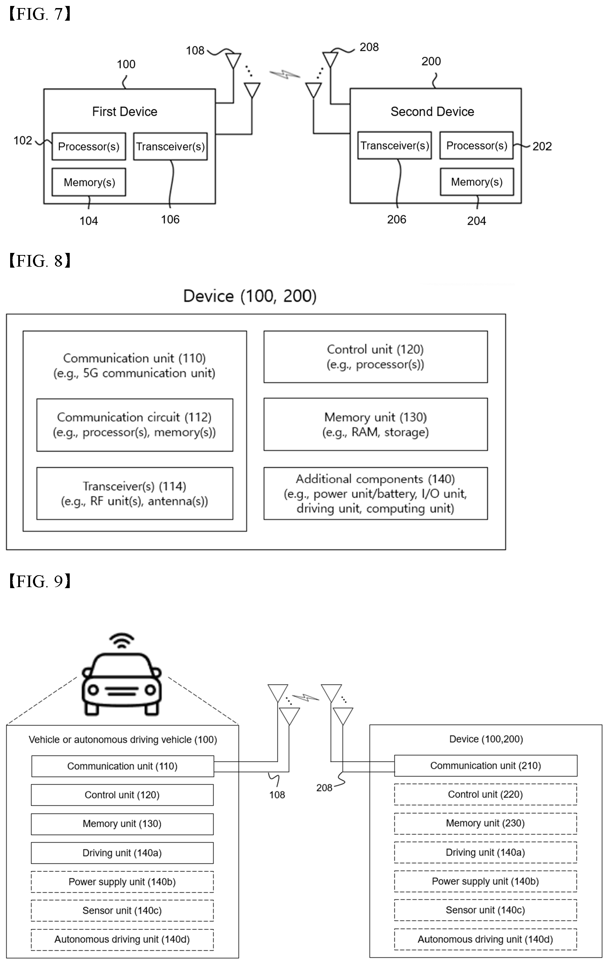

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of transmitting and receiving a signal by a user equipment (UE) in a wireless communication system, the method comprising:
receiving (i) a configuration for a UE discontinuous reception (DRX) operation and (ii) a configuration for a cell discontinuous transmission (DTX) operation and a cell DRX operation; and
receiving downlink control information (DCI) including a first field for activation and deactivation of the cell DTX operation and the cell DRX operation based on the UE DRX operation,
wherein, outside an active time based on the UE DRX operation, the first field is received together with a second field for a wake-up indication.

2. The method of claim 1, wherein, within the active time based on the UE DRX operation, the first field is received without the second field.

3. The method of claim 1, wherein, outside the active time based on the UE DRX operation, the DCI includes first blocks including first fields for each of a plurality of UEs and second blocks including second fields, and
the first blocks are located after the second blocks.

4. The method of claim 3, further comprising receiving first information about a location of a first block for the UE among the first blocks and second information about a location of a second block for the UE among the second blocks,
wherein, outside the active time based on the UE DRX operation, the location of the first block is derived based on a sum of the first information and the second information.

5. The method of claim 1, wherein the DCI is received via a monitoring occasion (MO) for a DCI format linked with the second field.

6. A user equipment (UE) for transmitting and receiving a signal in a wireless communication system, the UE comprising:
at least one transceiver;
at least one processor; and
at least one memory operably connected to the at least one processor and storing instructions that, when executed, cause the at least one processor to perform a specific operation;
wherein the specific operation includes:
receiving (i) a configuration for a UE discontinuous reception (DRX) operation and (ii) a configuration for a cell discontinuous transmission (DTX) operation and a cell DRX operation; and
receiving downlink control information (DCI) including a first field for activation and deactivation of the cell DTX operation and the cell DRX operation based on the UE DRX operation, and
outside an active time based on the UE DRX operation, the first field is received together with a second field for a wake-up indication.

7. The UE of claim 6, wherein, within the active time based on the UE DRX operation, the first field is received without the second field.

8. The UE of claim 6, wherein, outside the active time based on the UE DRX operation, the DCI includes first blocks including first fields for each of a plurality of UEs and second blocks including second fields, and
the first blocks are located after the second blocks.

9. The UE of claim 8, further comprising receiving first information about a location of a first block for the UE among the first blocks and second information about a location of a second block for the UE among the second blocks,
wherein, outside the active time based on the UE DRX operation, the location of the first block is derived based on a sum of the first information and the second information.

10. The UE of claim 6, wherein the DCI is received via a monitoring occasion (MO) for a DCI format linked with the second field.

11. An apparatus for a user equipment (UE), the apparatus comprising:
at least one processor; and
at least one computer memory operably connected to the at least one processor and configured to, when executed, cause the at least one processor to perform an operation, wherein the operations include:
receiving (i) a configuration for a UE discontinuous reception (DRX) operation and (ii) a configuration for a cell discontinuous transmission (DTX) operation and a cell DRX operation; and
receiving downlink control information (DCI) including a first field for activation and deactivation of the cell DTX operation and the cell DRX operation based on the UE DRX operation, and
outside an active time based on the UE DRX operation, the first field is received together with a second field for a wake-up indication.

12. A computer-readable non-volatile storage medium comprising at least one computer program that causes at least one processor to perform an operation, the operation comprising:
receiving (i) a configuration for a UE discontinuous reception (DRX) operation and (ii) a configuration for a cell discontinuous transmission (DTX) operation and a cell DRX operation; and
receiving downlink control information (DCI) including a first field for activation and deactivation of the cell DTX operation and the cell DRX operation based on the UE DRX operation, and
wherein, outside an active time based on the UE DRX operation, the first field is received together with a second field for a wake-up indication.

13. A method of transmitting and receiving a signal by a base station (BS) in a wireless communication system, the method comprising:
transmitting (i) a configuration for a UE discontinuous reception (DRX) operation and (ii) a configuration for a cell discontinuous transmission (DTX) operation and a cell DRX operation; and
transmitting downlink control information (DCI) including a first field for activation and deactivation of the cell DTX operation and the cell DRX operation based on the UE DRX operation, and
wherein, outside an active time based on the UE DRX operation, the first field is transmitted together with a second field for a wake-up indication.

14. A base station (BS) for transmitting and receiving a signal in a wireless communication system, the BS comprising:
at least one transceiver;
at least one processor; and
at least one memory operably connected to the at least one processor and storing instructions that, when executed, cause the at least one processor to perform a specific operation;
wherein the specific operation includes:
transmitting (i) a configuration for a UE discontinuous reception (DRX) operation and (ii) a configuration for a cell discontinuous transmission (DTX) operation and a cell DRX operation; and
transmitting downlink control information (DCI) including a first field for activation and deactivation of the cell DTX operation and the cell DRX operation based on the UE DRX operation, and
outside an active time based on the UE DRX operation, the first field is transmitted together with a second field for a wake-up indication.
